# DEMANDE DE BREVET EUROPEEN

(11) **EP 1 380 380 A2**
(43) Date de publication de la demande: **14.01.2004**
(21) Numéro de dépôt: 03291811.2
(22) Date de dépôt: 26.04.2001
(51) Int. Cl.: B23K 28/02, B23K 26/14

(54) **Procédé de soudage hybride laser-arc avec gaz approprié et électrode fusible**

(30) Priorité: 31.05.2000 FR 0007013
(62) Demande divisionnaire de: 01401078.9
(71) Demandeur: L'air Liquide, S.A. à Directoire et Conseil de Surveillance pour l'Etude et l'Exploitation des Procédés Georges Claude, 75321 Paris Cedex 07 (FR)
(72) Inventeur: Briand, Francis, 75009 Paris (FR); Bonnet, Christian, 95650 Puiseux-Pontoise (FR); Lefebvre, Philippe, 95310 Saint Ouen l'Aumone (FR)
(74) Mandataire: Pittis, Olivier

(57) **Abrégé**

Procédé de soudage hybride de pièces métalliques par réalisation d'un joint de soudure entre les bords à souder des pièces en aluminium ou en un alliage d'aluminium, en acier ou en acier inoxydable. Le joint de soudure est obtenu par combinaison d'un faisceau laser émis par un laser de type Nd:YAG avec un arc électrique obtenu au moyen d'un électrode de type fil fusible. Pendant le soudage du joint, on protège la zone de soudage avec une atmosphère gazeuse protectrice formée d'un mélange gazeux constitué d'argon ou d'hélium en une teneur supérieure ou égale à 70% en volume et d'au moins un composé additionnel choisi parmi O₂ et CO₂ en une teneur inférieure à 30% en volume. Utilisation de ce procédé de soudage pour souder des flancs raboutés destinés à constituer un élément de carrosserie de véhicule ou bien pour assembler par soudage les deux bords longitudinaux d'un tube. Les pièces métalliques à souder peuvent avoir des épaisseurs égales ou différentes, ou des compositions métallurgiques ou des nuances métallurgiques différentes.

## Description

La présente invention concerne un procédé et une installation hybrides de soudage combinant un faisceau laser et un arc électrique, en particulier un arc plasma, utilisant des mélanges gazeux particuliers en tant que gaz d'assistance du faisceau laser et/ou de l'arc électrique, et son application au soudage de tubes ou de flancs raboutés (tailored blanks).

La technologie du laser est connue et largement utilisée depuis des années pour souder des matériaux métalliques divers, telles des pièces en aciers alliés ou non, en aciers revêtus, en aciers inoxydables, en aluminium et alliages d'aluminium, ou encore des tubes en métaux divers.

D'une façon générale, une installation de soudage laser de soudage de tube comprend, outre les moyens d'amenée et de maintien du tube, un oscillateur laser solide ou à gaz produisant un faisceau monochromatique cohérent de haute énergie, un chemin optique équipé de miroirs de renvois ou bien une fibre optique permettant d'amener le faisceau laser vers une tête de soudage située en regard du tube à souder.

La tête de soudage comprend classiquement une lentille ou un ou plusieurs miroirs de focalisation de façon à focaliser le faisceau laser en un ou plusieurs points de focalisation dans l'épaisseur du matériau à souder et au niveau du plan de joint obtenu par réunion bord-à-bord soit des bords longitudinaux de la feuille métallique à souder en forme de tube (formage en "O") dans le cas de la fabrication d'un tube, soit des bords des pièces à assembler l'une à l'autre dans le cas du soudage de plusieurs pièces métalliques l'une avec l'autre, par exemple des flancs raboutés, de façon à concentrer localement suffisamment de densité de puissance pour fondre le matériau à souder.

Habituellement, la tête de soudage comprend un dispositif d'amené de gaz permettant l'alimentation en gaz de soudage, encore appelé gaz d'assistance, par l'intermédiaire d'une buse de distribution de gaz placée coaxialement au faisceau laser. Ce dispositif d'amené de gaz peut être aussi extérieur à la tête de soudage laser proprement dite.

Une solution alternative consiste à réaliser la fusion des bords à unir au niveau du plan de joint au moyen d'un ou plusieurs arcs électriques et en utilisant du gaz soit en tant que gaz de protection, soit en tant que gaz actif.

De tels procédés de soudage sont également couramment utilisés dans l'industrie ; selon le cas, il s'agit des procédés TIG (Tunsgten Inert Gas), MIG (Metal Inert Gas), MAG (Metal Active Gas) ou encore des procédés à l'arc plasma ou encore à l'arc submergé.

De tels procédés de soudage sont décrits notamment par les documents suivants : EP-A-847831, US-A-4,673,121, EP-A-136276, JP-A-58148096, JP-A-03198998, JP-A-03198997, EP-A-896853, US-A-5,192,016, US-A-4,738,714, EP-A-899052, JP-A-58107294, EP-A-234623, US-A-1,872,008, US-A-4,396,820, US-A-4,811,888 et US-A-3,931,489.

Toutefois, les procédés de soudage par laser ou les procédés de soudage à l'arc présentent chacun des inconvénients qui leurs sont propres et qui peuvent ou non varier selon que l'on soude un tube ou des flancs raboutés ou d'autres pièces métalliques.

Par exemple, dans le cas de la fabrication d'un tube, le processus de fabrication comporte, en général, une phase de formation d'un pré-tube à partir d'une bande métallique rectangulaire ou feuillard, suivie d'une phase de soudage du pré-tube en un tube soudé.

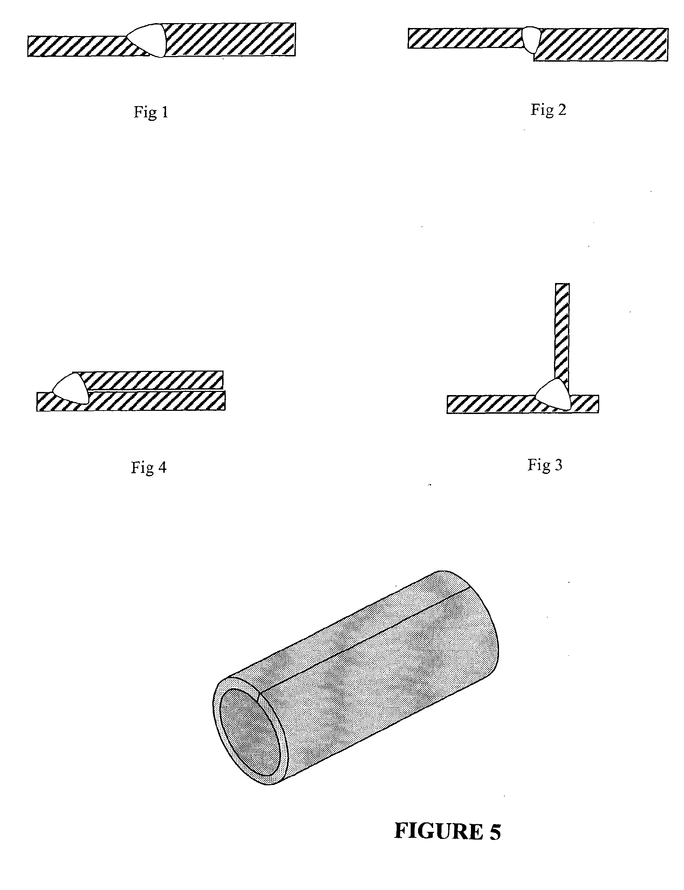

Selon une première technique, le soudage est réalisé axialement, c'est-à-dire que la bande métallique est successivement mise en forme de U puis de O par rapprochement de ses deux bords longitudinaux parallèles de manière à obtenir un pré-tube non soudé, et on opère ensuite un soudage longitudinal ou axial des deux bords à rabouter du pré-tube avec ou sans chanfrein pour obtenir un tube soudé axialement, comme schématisé sur la figure 5.

Selon une deuxième technique, le soudage peut être hélicoïdal ou en spirale. Dans ce cas, la bande métallique est d'abord soumise à une torsion selon un mouvement en spirale de manière à obtenir un rapprochement ou raboutage des deux bords longitudinaux de ladite bande selon un plan de joint ayant une forme de spirale ou d'hélice de manière à former, là encore, un pré-tube non soudé, ce pré-tube étant alors soumis à un soudage hélicoïdal de manière à assembler lesdits deux bords pour obtenir un tube soudé.

Bien entendu, dans tous les cas, le pré-tube et la tête de soudage sont animés d'un mouvement de déplacement relatif l'un par rapport à l'autre, c'est-à-dire soit le tube est fixe et la tête de soudage se déplace, soit l'inverse.

La phase de soudage peut se faire en une ou plusieurs passes et par mise en oeuvre d'un ou plusieurs procédés de soudage suivant le diamètre et l'épaisseur du pré-tube à souder.

Ces opérations sont effectuées à grande vitesse et il est important d'utiliser des procédés de soudage qui permettent d'avoir la pénétration désirée sans ralentir le processus de formage, c'est-à-dire aussi une vitesse minimale désirée permettant de conserver une productivité maximale ou, en tout cas, la plus élevée possible.

Dans les lignes de fabrication industrielles de tubes, on utilise très souvent le processus de soudage multi-cathodes qui met en oeuvre, en général, plusieurs arcs électriques TIG ou plasma alignés dans le plan de joint à souder.

Parfois, on utilise également le soudage par laser pour souder les tubes. En effet, par rapport au procédé multi-cathodes, l'utilisation d'un laser permet d'augmenter les vitesses mais au détriment d'une précision accrue qui impose alors un alignement beaucoup plus précis des bords à souder ainsi qu'un contrôle précis du jeu entre les bords à souder, ce qui est fort coûteux sur le plan des outillages à mettre en oeuvre.

Par analogie, dans le cas du soudage de flancs raboutés, tels ceux destinés à l'industrie automobile, il faut assembler entre elles deux tôles ou pièces, en général en acier, en acier galvanisé ou en aluminium, d'épaisseurs différentes et/ou de nuances différentes.

Suivant les méthodes et les préparations de soudage utilisées, le joint à souder se caractérise souvent par une différence de niveau entre les plans supérieurs de chacune des pièces à souder conduisant ainsi à la génération d'une "marche", comme montré sur la figure 1. Néanmoins, on peut également rencontrer la situation inverse, à savoir des joints de type flancs raboutés dont les plans supérieurs sont alignés mais dont les plans inférieurs ne sont pas de même niveau et où donc la « marche » est située à l'envers du joint à souder comme visible sur la figure 2. En outre, existe aussi le cas de pièces à souder ensemble qui sont de même épaisseur mais de nuances différentes l'une de l'autre.

On trouve fréquemment ce genre de soudures (Fig. 1 ou Fig. 2) dans l'industrie automobile où les pièces, une fois soudées, sont embouties pour leur donner leurs formes finales, par exemple, les différentes pièces qui entrent dans la fabrication d'une carrosserie de voiture et par exemple les portières, le toit, le capot ou le coffre. On peut aussi en trouver dans les éléments de structure de l'habitacle.

Afin d'améliorer les procédés connus de soudage de tubes ou de flancs raboutés, il a été proposé d'opérer un soudage des bords à unir l'un avec l'autre, par mise en oeuvre d'un procédé de soudage hybride combinant arc électrique et faisceau laser, en particulier arc plasma et faisceau laser.

Outre, les applications susmentionnées, un procédé de soudage hybride est également bien adapté au soudage de nombreux autres types de joints et peut, dès lors, être aussi utilisé pour, par exemple, le soudage d'angle schématisé sur la figure 3 et le soudage à clin montré sur la figure 4.

Divers procédés de soudage hybrides arc et laser ont été décrits notamment dans les documents EP-A-793558 ; EP-A-782489 ; EP-A-800434 ; US-A-5,006,688 ; US-A-5,700,989 ; EP-A-844042 ; *Laser GTA'Welding of aluminium alloy 5052,* TP Diebold et CE Albright, 1984, p. 18-24 ; SU-A-1815085, US-A-4,689,466 ; *Plasma arc augmented laser welding,* RP Walduck et J. Biffin, p.172-176, 1994; ou *TIG or MIG arc augmented laser welding of thick mild steel plate, Joining and Materials,* de J Matsuda et al., p. 31-34, 1988.

De façon générale, un procédé de soudage plasma-laser, ou plus généralement laser-arc, est un procédé de soudage hybride ou mixte qui associe le soudage à l'arc électrique à un faisceau laser.

Le procédé arc-laser consiste à générer un arc électrique entre une électrode, fusible ou non fusible, et la pièce à souder, et à focaliser un faisceau laser de puissance, notamment un laser de type YAG ou de type CO₂, dans la zone d'arc, c'est-à-dire au niveau ou dans le plan de joint obtenu par réunion bord-à-bord des parties du pré-tube à souder entre elles.

Un tel procédé hybride permet d'améliorer considérablement les vitesses de soudage par rapport au soudage laser seul ou au soudage à l'arc ou au plasma seul, et permet, en outre, d'accroître notablement les tolérances de positionnement des bords avant soudage ainsi que le jeu toléré entre les bords à souder, en particulier par rapport au soudage par faisceau laser seul qui exige une précision importante de positionnement des parties à souder à cause de la petite taille du point focal du faisceau laser.

La mise en oeuvre d'un procédé plasma-laser, et plus généralement d'un procédé arc-laser, requiert l'utilisation d'une tête de soudage qui permet de combiner dans un espace réduit le faisceau laser et son dispositif de focalisation, ainsi qu'une électrode de soudage adaptée.

Plusieurs configurations de têtes sont décrites dans les documents ci-dessus mentionnés et l'on peut dire, en résumé, que le faisceau laser et l'arc électrique ou le jet de plasma peuvent être délivrés par une seule et même tête de soudage, c'est-à-dire qu'ils sortent par le même orifice, ou alors par deux têtes de soudage distinctes, l'une délivrant le faisceau laser et l'autre l'arc électrique ou le jet de plasma, ceux-ci se réunissant dans la zone de soudage.

Les procédés hybrides arc-laser sont réputés parfaitement adaptés au soudage des flancs raboutés (ou tailored blanks) pour l'industrie automobile, car ils permettent d'obtenir un cordon de soudure bien mouillé et exempt de caniveaux, comme le rappelle les documents EP-A-782489 ou *Laser plus arc equals power, Industrial Laser Solutions,* February 1999, p.28-30.

De façon générale, lors de la réalisation du joint de soudure, il est indispensable d'utiliser un gaz d'assistance pour assister le faisceau laser et protéger la zone de soudage des agressions extérieures et un gaz pour l'arc électrique, en particulier un gaz plasmagène servant à créer le jet de plasma d'arc, dans le cas d'un procédé arc-plasma.

Toutefois, il a été observé, en pratique, que les résultats, c'est-à-dire la qualité de la soudure obtenue, pouvaient varier considérablement en fonction des gaz utilisés en tant que gaz d'assistance du faisceau laser et gaz plasmagène.

De plus, en raison d'incompatibilités possibles entre le gaz et les pièces à souder par le procédé hybride, on ne peut pas utiliser n'importe quel gaz et n'importe comment, notamment il est habituellement recommandé de ne pas souder de l'aluminium avec un gaz contenant du CO₂ ou de l'O₂ dans la mesure où ces composés engendrent d'importantes diminution des propriétés mécaniques de la soudure obtenu, c'est-à-dire accroissent les risques de rupture de celle-ci.

De façon analogue, il est connu que l'oxygène et le dioxyde de carbone ne doivent pas être mis en contact directe avec l'électrode en tungstène servant à générer l'arc électrique pour ne pas la détériorer.

En outre, utiliser un gaz à base de CO₂ avec un laser de type CO₂ n'est pas souhaitable car le CO₂ risque d'absorber l'énergie du faisceau laser.

A l'inverse, la présence d'oxygène peut être bénéfique au soudage de certains matériaux, tels les aciers. En effet, malgré la présence du plasma de soudage laser ou des vapeurs métalliques présentes dans la zone d'interaction qui vont naturellement être un lieu de fixation ou de confinement de l'arc électrique, il peut s'avérer nécessaire de stabiliser davantage l'arc électrique, notamment en injectant un peu d'oxygène dans la zone d'interaction, de manière à créer à la surface du bain des oxydes sur lesquels l'arc électrique viendra s'accrocher.

Partant de ces constatations, le but de l'invention est alors de proposer un procédé de soudage hybride amélioré permettant de souder efficacement des pièces en aluminium ou ses alliages, en acier ou en acier inoxydable, utilisant un mélange gazeux permettant d'éviter les problèmes d'incompatibilité susmentionnés et obtenir des soudures de qualité.

L'invention concerne alors un procédé de soudage hybride d'une ou plusieurs pièces métalliques à assembler par réalisation d'au moins un joint de soudure entre les bords à souder portés par la ou lesdites pièces métalliques, ledit joint de soudure étant obtenu par mise en oeuvre d'au moins un faisceau laser et d'au moins un arc électrique, dans lequel, pendant le soudage du joint, on protège au moins une partie de la zone de soudage comprenant au moins une partie dudit joint de soudure en cours de réalisation avec au moins une atmosphère gazeuse protectrice, caractérisé en ce que :
- la ou les pièces métalliques sont en aluminium ou en un alliage d'aluminium, en acier ou en acier inoxydable,
- le faisceau laser est émis par un laser de type Nd:YAG,
- l'électrode est un fil fusible, et
- l'atmosphère protectrice est formée d'un mélange gazeux constitué d'argon ou d'hélium en une teneur supérieure ou égale à 70% en volume et d'au moins un composé additionnel choisi parmi O₂ et CO₂ en une teneur inférieure à 30% en volume.

Selon le cas, le procédé de soudage de l'invention peut comprendre l'une ou plusieurs des caractéristiques suivantes :
- la teneur en au moins un composé additionnel choisi parmi O₂ et CO₂ est non nulle et inférieure ou égale à 20% en volume, de préférence non nulle et inférieure ou égale à 15% en volume.
- l'atmosphère protectrice est formée par un mélange gazeux constitué d'argon en une teneur supérieure ou égale à 70% en volume et d'au moins un composé additionnel choisi parmi O₂ et CO₂ en une teneur de 0.1 à 30% en volume.
- l'atmosphère protectrice est formée par un mélange gazeux constitué d'hélium en une teneur supérieure ou égale à 70% en volume et d'au moins un composé additionnel choisi parmi O₂ et CO₂ en une teneur de 0.1 à 30% en volume.
- l'atmosphère protectrice est formée par un mélange gazeux constitué d'au moins 70% en volume d'hélium et d'argon et de 0.1 à 30% en volume d'au moins un composé additionnel choisis parmi H₂, O₂, CO₂ et N₂, de préférence un mélange gazeux constitué de 0,1% à 69,9% en volume d'hélium, de 0,1% à 69,9% en volume d'argon et de 0,1 à 30 % en volume d'au moins un composé additionnel choisis parmi H₂, O₂, CO₂ et N₂, la somme des teneurs en argon et en hélium étant au moins 70% du volume total du mélange.
- la ou les pièces à souder sont en un métal ou un alliage métallique choisi parmi les aciers revêtus ou non-revêtus, en particulier les aciers d'assemblage, les aciers au carbone, les aciers comportant en surface une couche d'alliage de zinc, les aciers à hautes limites élastiques (HLES).
- l'atmosphère protectrice est formée par un mélange gazeux constitué d'au moins 70% en volume d'hélium et/ou d'argon et de 0.1 à 30% en volume d'au moins un composé additionnel choisis parmi O₂ et CO₂ et en ce que la ou les pièces à souder sont en acier, notamment en acier au carbone.
- l'atmosphère protectrice est formée par un mélange gazeux constitué d'au moins 70% en volume d'hélium, de 0.1 à 30% en volume d'hydrogène et de 0 à 29.9% en volume d'au moins un composé additionnel choisis parmi O₂ et CO₂ et en ce que la ou les pièces à souder sont en acier inoxydable.
- l'atmosphère protectrice est formée par un mélange gazeux constitué d'au moins 90% en volume d'hélium ou d'argon et de 0.1 à 10% en volume d'au moins un composé additionnel choisis parmi O₂ et CO₂, et en ce que la ou les pièces à souder sont en aluminium, de préférence au moins 96 % en volume d'hélium ou d'argon et de 0.1 à 4% en volume d'au moins un composé additionnel choisis parmi O₂ et CO₂.

L'invention concerne aussi l'utilisation du procédé de soudage ci-avant pour souder au moins un flanc rabouté destiné à constituer au moins une partie d'un élément de carrosserie de véhicule.

L'invention concerne, par ailleurs, l'utilisation du procédé de soudage ci-avant pour assembler par soudage des pièces métalliques ayant des épaisseurs différentes, en particulier des flancs raboutés.

Selon un autre aspect, l'invention porte aussi sur l'utilisation du procédé de soudage ci-avant pour assembler par soudage des pièces métalliques ayant des épaisseurs égales ou différentes et ayant des compositions métallurgiques ou des nuances métallurgiques différentes, en particulier des flancs raboutés.

Selon encore un autre aspect, l'invention porte aussi sur l'utilisation du procédé de soudage ci-avant pour assembler par soudage les deux bords longitudinaux d'un tube.

Compte tenu des géométries possibles de têtes de soudage, des procédés hybrides selon l'invention et des différents moyens d'amener les gaz ou les mélanges gazeux, les mélanges gazeux selon l'invention et dont il sera question ci-après sont ceux que l'on obtient dans la zone d'interaction entre la ou les tôles à souder et le laser et l'arc, indépendamment de la manière dont on a pu les créer.

Dans les exemples ci-après sont donnés plusieurs types de mélanges gazeux pouvant être utilisés pour souder différents matériaux selon la présente invention.

### Soudage hybride laser/arc électrique avec fil fusible selon l'invention

| Mélange gazeux | Teneurs (% en vol.) | Matériau soudé |
|---|---|---|
| Ar + CO₂ | CO₂: < 15 Ar : le reste | Aciers carbone |
| Ar + O₂ | O₂:<7 Ar : le reste | Aciers carbone |
| Ar + CO₂ + O₂ | O₂: <5 CO₂ : < 10 Ar : le reste | Aciers carbone |
| He + CO₂ + O₂ | O₂ : < 5 CO₂ : < 10 He : le reste | Aciers carbone |
| Ar + CO₂ | CO₂: < 2 Ar: le reste | Aluminium Aciers inoxydables |
| Ar + O₂ | O₂: < 2 Ar: le reste | Aluminium Aciers inoxydables |
| He + CO₂ | CO₂: < 2 He: le reste | Aluminium Aciers inoxydables |
| He + O₂ | O₂: < 2 He: le reste | Aluminium Aciers inoxydables |

## Revendications

1. Procédé de soudage hybride d'une ou plusieurs pièces métalliques à assembler par réalisation d'au moins un joint de soudure entre les bords à souder portés par la ou lesdites pièces métalliques, ledit joint de soudure étant obtenu par mise en oeuvre d'au moins un faisceau laser et d'au moins un arc électrique, dans lequel, pendant le soudage du joint, on protège au moins une partie de la zone de soudage comprenant au moins une partie dudit joint de soudure en cours de réalisation avec au moins une atmosphère gazeuse protectrice, **caractérisé en ce que** :
- la ou les pièces métalliques sont en aluminium ou en un alliage d'aluminium, en acier ou en acier inoxydable,
- le faisceau laser est émis par un laser de type Nd:YAG,
- l'électrode est un fil fusible, et
- l'atmosphère protectrice est formée d'un mélange gazeux constitué d'argon ou d'hélium en une teneur supérieure ou égale à 70% en volume et d'au moins un composé additionnel choisi parmi O₂ et CO₂ en une teneur inférieure à 30% en volume.

2. Procédé de soudage selon la revendication 1, **caractérisé en ce que** la teneur en au moins un composé additionnel choisi parmi O₂ et CO₂ est non nulle et inférieure ou égale à 20% en volume, de préférence non nulle et inférieure ou égale à 15% en volume.

3. Procédé de soudage selon l'une des revendications 1 ou 2, **caractérisé en ce que** l'atmosphère protectrice est formée par un mélange gazeux constitué d'argon en une teneur supérieure ou égale à 70% en volume et d'au moins un composé additionnel choisi parmi O₂ et CO2 en une teneur de 0.1 à 30% en volume.

4. Procédé de soudage selon l'une des revendications 1 ou 2, **caractérisé en ce que** l'atmosphère protectrice est formée par un mélange gazeux constitué d'hélium en une teneur supérieure ou égale à 70% en volume et d'au moins un composé additionnel choisi parmi O₂ et CO₂ en une teneur de 0.1 à 30% en volume.

5. Procédé de soudage selon l'une des revendications 1 à 3, **caractérisé en ce que** le gaz est constitué d'un mélange d'argon et de CO₂ contenant moins de 15% en volume de CO₂ et de l'argon pour le reste.

6. Procédé de soudage selon l'une des revendications 1 à 3, **caractérisé en ce que** le gaz est constitué d'un mélange d'argon et de O₂ contenant moins de 7% en volume de O₂ et de l'argon pour le reste.

7. Procédé de soudage selon l'une des revendications 1 à 3, **caractérisé en ce que** le gaz est constitué d'un mélange d'argon, de CO₂ et de O₂ contenant moins de 5% en volume de O₂, moins de 10% de CO₂ et de l'argon pour le reste.

8. Procédé de soudage selon l'une des revendications 1, 2 ou 4, **caractérisé en ce que** le gaz est constitué d'un mélange d'hélium, de CO₂ et de O₂ contenant moins de 5% en volume de O₂, moins de 10% de CO₂ et de l'hélium pour le reste.

9. Procédé de soudage selon l'une des revendications 6 à 8, **caractérisé en ce que** la ou les pièces sont en acier au carbone.

10. Procédé de soudage selon l'une des revendications 1 à 3,
**caractérisé en ce que** le gaz est constitué d'un mélange d'argon et de CO₂ contenant moins de 2% en volume de CO₂ et de l'argon pour le reste.

11. Procédé de soudage selon l'une des revendications 1 à 3, **caractérisé en ce que** le gaz est constitué d'un mélange d'argon et de O₂ contenant moins de2% en volume de O₂ et de l'argon pour le reste.

12. Procédé de soudage selon l'une des revendications 1, 2 ou 4, **caractérisé en ce que** le gaz est constitué d'un mélange d'hélium et de O₂ contenant moins de 2% en volume de O₂ et de l'hélium pour le reste.

13. Procédé de soudage selon l'une des revendications 1, 2 ou 4, **caractérisé en ce que** le gaz est constitué d'un mélange d'hélium et de CO₂ contenant moins de 2% en volume de CO₂ et de l'hélium pour le reste.

14. Procédé de soudage selon l'une des revendications 10 à 13, **caractérisé en ce que** la ou les pièces sont en acier inoxydable ou en aluminium.

15. Procédé de soudage selon l'une des revendications 1 à 8, **caractérisé en ce que** l'atmosphère protectrice est formée par un mélange gazeux constitué d'au moins 90% en volume d'hélium ou d'argon et de 0.1 à 10% en volume d'au moins un composé additionnel choisis parmi O₂ et CO₂, et **en ce que** la ou les pièces à souder sont en aluminium, de préférence au moins 96 % en volume d'hélium ou d'argon et de 0.1 à 4% en volume d'au moins un composé additionnel choisis parmi O₂ et CO₂

16. Utilisation d'un procédé de soudage selon l'une des revendications 1 à 15 pour souder au moins un flanc rabouté destiné à constituer au moins une partie d'un élément de carrosserie de véhicule.

17. Utilisation d'un procédé de soudage selon l'une des revendications 1 à 15 pour assembler par soudage des pièces métalliques ayant des épaisseurs égales ou différentes, en particulier des flancs raboutés.

18. Utilisation d'un procédé de soudage selon l'une des revendications 1 à 15 pour assembler par soudage des pièces métalliques ayant des compositions métallurgiques ou des nuances métallurgiques différentes, en particulier des flancs raboutés.

19. Utilisation d'un procédé de soudage selon l'une des revendications 1 à 15 pour assembler par soudage les deux bords longitudinaux d'un tube.
